# EUROPÄISCHE PATENTSCHRIFT

(11) **EP 1 862 747 B1**
(45) Veröffentlichungstag und Bekanntmachung des Hinweises auf die Patenterteilung: **21.05.2014**
(21) Anmeldenummer: 07010203.3
(22) Anmeldetag: 23.05.2007
(51) Int. Cl.: F24H 1/32, F24H 9/14

(54) **Wärmetauscher**
Heat exchanger
Echangeur thermique

(30) Priorität: 01.06.2006 DE 102006025496
(43) Veröffentlichungstag der Anmeldung: 05.12.2007
(73) Patentinhaber: ROBERT BOSCH GMBH, 70442 Stuttgart (DE)
(72) Erfinder: Rausch, Rainer, 36304 Alsfeld (DE)

(56) Entgegenhaltungen:
- AT-B- 269 424
- DE-A1- 2 503 933
- DE-A1- 4 400 157
- DE-U1- 29 621 817

## Beschreibung

Die Erfindung betrifft einen Wärmetauscher, insbesondere zur Verwendung in einem Brennwertheizgerät nach dem Oberbegriff des Patentanspruches 1.
Gattungsgemäße Wärmetauscher werden bei Heizgeräten für den Wärmeaustausch zwischen den Heizgasen und dem Heizwasser eingesetzt. Hinsichtlich der Abgasführung und des Wirkungsgrades der Heizgeräte unterscheidet man zwischen Heizwerttechnik und Brennwerttechnik. Aus Gründen der Energieeinsparung kommen immer mehr Brennwertheizgeräte zur Anwendung. Der Aufbau ihres Wärmetauschers gewährt die Möglichkeit, die im Betrieb bei der Verbrennung von Brennstoff und Luft entstehenden feuchten Abgase unter den Abgastaupunkt abzukühlen. Dabei kondensiert die Feuchtigkeit der Abgase aus und es wird zusätzlich zur fühlbaren Wärme die Kondensationswärme auf das Heizwasser übertragen.
Aufgrund der Zusammensetzung des verwendeten Brennstoffs und der Verbrennungsführung sind die Abgase schadstoffbelastet und das anfallende Kondenswasser weist verschiedene Säuren in geringer Konzentration auf. Die von Kondenswasser berührten Bauteile wie Wärmetauscher, Abgassammler und Abgasleitung müssen also gegenüber den Säuren resistent sein, weshalb es üblich ist, diese Bauteile aus Edelstahl, Aluminium oder Kunststoff zu fertigen. Speziell in der Ölbrennwerttechnik kommen im Allgemeinen geschweißte Edelstahlwärmetauscher zur Anwendung. Sie bieten den Vorteil, die Säurebelastung ohne Korrosion zu ertragen. Nachteilig sind die mit dem Werkstoff verbundenen hohen Kosten, ungünstigere Skalierbedingungen und die größeren, in räumlich engen Verhältnissen schwer montierbaren Baugrößen.
Die Wärmetauscher konventioneller Heizwertgeräte werden häufig aus Gusseisen hergestellt. Sie zeichnen sich durch hohe Robustheit und lange Lebensdauer aus. Ihr Aufbau aus zumeist identischen Gusssegmenten erlaubt eine kostengünstige Fertigung und leichte Skalierbarkeit hinsichtlich unterschiedlicher Leistungsgrößen und bietet gute Montagemöglichkeiten selbst unter engen Aufstellbedingungen. Der Werkstoff erträgt die kurzen Abgaskondensationsphasen bei Betriebsstart und kaltem Wärmetauscher sehr gut. Lediglich für den Brennwertbetrieb mit länger anhaltendem Kondenswasseranfall ist Gusseisen in seiner heutigen Form nicht geeignet.

Hinsichtlich der heizwasserseitigen Strömungsführung unterscheidet man zwischen zwangsdurchströmten und nicht zwangsdurchströmten Wärmetauschern. Bei zwangsdurchströmten Wärmetauschern sorgt eine Umwälzpumpe für einen vorgegebenen Wasservolumenstrom durch die zumeist engen, mäanderförmig angelegten Wasserkanäle. Auf diese Weise sind trotz geringen Wasserinhaltes recht hohe, heizgasseitig eingetragene Wärmestromdichten realisierbar. Bei nicht zwangsdurchströmten Wärmetauschern ist der Heizwasserinhalt deutlich größer, gleichzeitig sind die realisierbaren Wärmestromdichten in der Regel niedriger. Die Wasserführung erfolgt nicht in engen geschlossenen Kanälen, sondern über oberflächenvergrößernde Wärmeleitelemente, beispielsweise in Rippenform, in vergleichsweise groß bemessenen Querschnitten und basiert auf thermischer Konvektion. Ausgehend von einem beispielsweise ruhenden Kessel- oder Speicherwasserinhalt wird bei heizgasseitiger Beheizung des Wärmetauschers das den Wärmetauscher berührende Wasser durch Wärmeleitung erwärmt. Aufgrund des thermischen Auftriebs kommt allmählich eine Strömungswalze auf der Wasserseite in Gang, die das erwärmte Wasser nach oben abführt und weiteres zu erwärmendes Wasser von unten an die heiße Wärmetauscheroberfläche heranführt. Wegen dieser konvektiven Strömungswalze und den groß bemessenen Querschnitten weisen nicht zwangsdurchströmte Wärmetauscher eine hohe Robustheit im Betrieb zum Beispiel gegenüber einem etwaigen Pumpenausfall auf.
Aus der DE 296 21 817 U1 ist ein Brennwertheizkessel mit integriertem und hydraulisch nachgeschaltetem Kompaktwärmetauscher aus korrosionsbeständigem Werkstoff bekannt. Dieser Kompaktwärmetauscher ist als separates Bauteil von zwei schalenförmigen Kesselgliedern umschlossen und wasserseitig gesondert angeschlossen. Alle Kessel mit nachgeschaltetem Wärmetauscher haben die Nachteile, dass der Montageaufwand durch die erforderlichen Rohrteile erhöht wird und der wasserseitige Widerstand ansteigt. Die Anordnung als separates außenliegendes Bauteil bewirkt ebenfalls Abkühlverluste, die durch eine geeignete Wärmedämmung vermindert werden müssen. Der Wärmetauscher ist für eine Reinigung nur schlecht zugänglich und eine einfache Skalierbarkeit auf größere Leistungsgrößen ist nicht gegeben.

Der Erfindung liegt die Aufgabe zugrunde, einen Wärmetauscher, insbesondere zur Verwendung in einem Brennwertheizgerät aus einem mehrteiligen Gusskörper mit aneinander gereihten Gusssegmenten, zu schaffen, der den korrosiven Angriff aus dem Kondenswasser erträgt, einen geringen hydraulischen Widerstand, geringe Abkühlverluste und eine gute Skalierbarkeit aufweist sowie gut zu reinigen ist.

Erfindungsgemäß wird dies mit den Merkmalen des Patentanspruches 1 gelöst. Vorteilhafte Weiterbildungen sind den Unteransprüchen zu entnehmen.
Der konstruktive Aufbau des Wärmetauschers ist dadurch gekennzeichnet, dass in den Gusssegmenten gesonderte herausnehmbare Wärmetauscherelemente integriert sind. Ein solches Wärmetauscherelement taucht mindestens teilweise in den Wasserraum des Gusssegmentes ein und bildet eine Wand des Wasserraumes eines Gusssegmentes. Das Wärmetauscherelement dient der Abkühlung der Heizgase bis unter den Abgastaupunkt und wird im Wesentlichen von oben nach unten durchströmt. Es besteht aus einem korrosionsbeständigen Werkstoff. Das Wärmetauscherelement und das korrespondierende Gusssegment weisen einander zugeordnete Flanschflächen auf, mit denen sie aneinander gefügt und wasserseitig abgedichtet werden. Die wärmeübertragende Fläche des Wärmetauscherelementes besteht in einer ersten Ausführungsform aus mindestens einem im Wesentlichen U-förmig gebogenen Rohrabschnitt, wobei der Rohrabschnitt mit seinen Ein-und Ausströmöffnungen in der Flanschfläche endet. Eine zweite Ausführungsform besteht aus mindestens einer flachen im Wesentlichen U-förmigen Tasche, wobei die Tasche ebenfalls mit ihren Ein- und Ausströmöffnungen in der Flanschfläche endet. Der Rohrabschnitt und die Tasche können oberflächenvergrößernde Elemente aufweisen. Eine solche Tasche kann aus zwei Halbschalen bestehen, die längs ihrer Fügelinie dicht miteinander verbundensind. Die Heizgasführung in dem erfindungsgemäßen Wärmetauscher verläuft über eine erste brennernahe Wärmetauscherfläche, unter einer sich anschließenden Abdeckung zum Ausbilden eines Überströmkanals in die Einströmöffnungen des darunter angeordneten Wärmetauscherelementes. Bei dem mehrteiligen Aufbau des Wärmetauschers aus zwei oder mehr Gusssegmenten reicht die Abdeckung über alle Einströmöffnungen der Wärmetauscherelemente. Bei einer Ausführungsvariante des Wärmetauschers verläuft die Hauptachse der Brennkammer senkrecht zu den Hauptebenen der Gusssegmente, wobei sich die Brennkammer über mindestens zwei Gusssegmente erstreckt. Eine andere Variante arbeitet nach dem Prinzip der Umkehrfeuerung, die Abdeckung ist als Brennertür ausgebildet, die in ihrem unteren Bereich den Überströmkanal bildet. Bei dem mehrteiligen Aufbau des Wärmetauschers aus zwei oder mehr Gusssegmenten münden die Ausströmöffnungen der Wärmetauscherelemente in einen gemeinsamen Abgas- und Kondenswassersammler.

Ein solcher erfindungsgemäßer Wärmetauscher bietet die Vorteile, die positiven Werkstoffeigenschaften von Gusswerkstoffen und Edelstahl bzw. Kunststoff gezielt anzuwenden und zu nutzen. So werden Hochtemperaturkorrosion und Säurekorrosion auslösende Belastungen mit jeweils optimal geeigneten Werkstoffen aufgefangen. Durch Verzicht auf die wasserseitige Zwangsdurchströmung ist ein robustes Aufheizverhalten gegeben, eine Wasseraufbereitung hinsichtlich Ablagerungen oder Korrosion ist nicht erforderlich. Die hydraulische Anbindung des integrierten Wärmetauscherelements beschränkt sich auf eine einfache Flanschverbindung und verzichtet auf weitere Rohrteile. Durch die Integration entstehen keine Auskühlverluste, auf eine gesonderte Wärmedämmung kann verzichtet werden. Dennoch ist eine gute Zugänglichkeit der Abgasseite des Wärmetauscherelements gewährleistet und die Reinigung oder ein gegebenenfalls erforderlicher Austausch sehr einfach. Wasserseitige und abgasseitige Strömungswiderstände sind sehr gering. In der Kesselfertigung kann jedes Gusssegment mit Wärmetauscherelement auf Dichtheit geprüft werden, der Zusammenbau erfolgt wie bei der herkömmlichen Montage. Der durch Bauteil- und Fertigungstoleranzen mögliche Versatz von Gusssegmenten zueinander muss durch die eine definierte Dichtstelle in jedem Gusssegment nicht kompensiert werden.

Die Zeichnungen stellen Ausführungsbeispiele der Erfindung dar. Es zeigt:

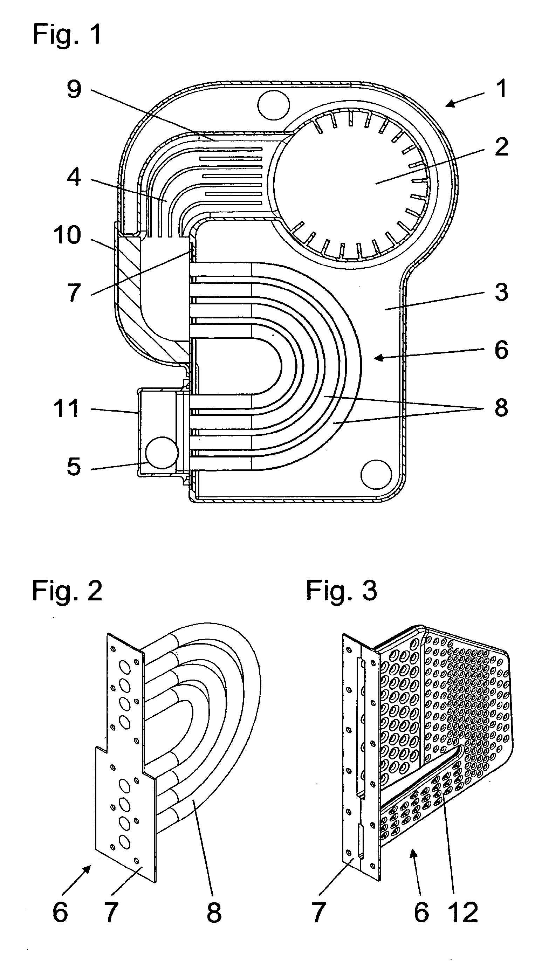

- Fig. 1:: ein Gusssegment eines Wärmetauschers mit herausnehmbarem Wärmetauscher-element im vertikalen Schnitt,
- Fig. 2:: ein Wärmetauscherelement in einer ersten möglichen Ausführungsform, und
- Fig. 3:: ein Wärmetauscherelement in einer zweiten möglichen Ausführungsform.

Das Gusssegment 1 besteht aus der horizontal ausgerichteten Brennkammer 2, einer ersten brennernahen Wärmetauscherfläche 9, der Heizgasführung 4 dem Abgas- und Kondenswassersammler 11 mit Abgasaustritt 5 sowie dem Wasserraum 3. In das Gusssegment 1 integriert ist das Wärmetauscherelement 6 mit Flansch und den einander zugeordneten Flanschflächen 7 am Wärmetauscherelement 6 bzw. am Gusssegment 1. Die Rohrabschnitte 8 und die Tasche 12 stellen die in den Wasserraum 3 eintauchende wärmetauschende Oberfläche des Wärmetauscherelementes 6 dar. Die Abdeckung 10 bildet einen Überströmkanal zwischen der brennernahen Wärmetauscherfläche 9 und dem Wärmetauscherelement 6.

## Patentansprüche

1. Wärmetauscher, insbesondere zur Verwendung in einem Brennwertheizgerät aus einem mehrteiligen Gusskörper mit aneinander gereihten Gusssegmenten (1), für den Wärmeaustausch zwischen Heizgasen und umgebendem Heizwasser, bestehend aus einer Brennkammer (2) mit Anschlussmöglichkeit für einen Gas- oder Ölbrenner, einem Wasserraum (3) mit Heizungswasservorlauf und Rücklaufanschlüssen, einer Heizgasführung (4) sowie einem Abgasaustritt (5),
**dadurch gekennzeichnet, dass** in den einzelnen Gusssegmenten gesonderte herausnehmbare Wärmetauscherelemente (6) integriert sind, wobei die Wärmetauscherelemente (6) mindestens teilweise in den Wasserraum (3) des Gusssegmentes (1) eintauchen und eine Wand des Wasserraumes (3) eines Gusssegmentes (1) bilden, und wobei die Wärmetauscherelemente (6) der Abkühlung der Heizgase bis unter den Abgastaupunkt dienen und im Wesentlichen von oben nach unten durchströmbar sind.

2. Wärmetauscher nach Anspruch 1,
**dadurch gekennzeichnet, dass** das Wärmetauscherelement (6) aus einem korrosionsbeständigen Werkstoff besteht.

3. Wärmetauscher nach Anspruch 1 oder 2,
**dadurch gekennzeichnet, dass** das Wärmetauscherelement (6) und das Gusssegment (1) einander zugeordnete Flanschflächen (7) aufweisen, mit denen sie aneinander gefügt und wasserseitig abgedichtet werden.

4. Wärmetauscher nach einem der Ansprüche 1 bis 3,
**dadurch gekennzeichnet, dass** die wärmeübertragende Fläche des Wärmetauscherelementes (6) aus mindestens einem im Wesentlichen U-förmig gebogenen Rohrabschnitt (8) besteht, wobei der Rohrabschnitt (8) mit seinen Ein- und Ausströmöffnungen in der Flanschfläche (7) endet.

5. Wärmetauscher nach einem der Ansprüche 1 bis 3,
**dadurch gekennzeichnet, dass** die wärmeübertragende Fläche des Wärmetauscherelementes (6) aus mindestens einer flachen im Wesentlichen U-förmigen Tasche (12) besteht, wobei die Tasche mit ihren Ein- und Ausströmöffnungen in der Flanschfläche (7) endet.

6. Wärmetauscher nach einem der Ansprüche 4 bis 5,
**dadurch gekennzeichnet, dass** der Rohrabschnitt (8) und die Tasche (12) oberflächenvergrößernde Elemente aufweisen.

7. Wärmetauscher nach einem der Ansprüche 5 bis 6,
**dadurch gekennzeichnet, dass** die Tasche (12) aus zwei Halbschalen besteht, die längs ihrer Fügelinie dicht miteinander verbunden sind.

8. Wärmetauscher nach einem der Ansprüche 1 bis 7,
**gekennzeichnet durch** eine erste brennernahe Wärmetauscherfläche (9) und eine sich anschließende Abdeckung (10) zum Ausbilden eines Überströmkanals in die Einströmöffnungen des darunter angeordneten Wärmetauscherelementes (6).

9. Wärmetauscher nach Anspruch 8,
**dadurch gekennzeichnet, dass** bei dem mehrteiligen Aufbau des Wärmetauschers aus zwei oder mehr Gusssegmenten die Abdeckung (10) über alle Einströmöffnungen der Wärmetauscherelemente (6) reicht.

10. Wärmetauscher nach einem der Ansprüche 1 bis 9,
**dadurch gekennzeichnet, dass** die Hauptachse der Brennkammer (2) senkrecht zu den Hauptebenen der Gusssegmente (1) verläuft, wobei sich die Brennkammer (2) über mindestens zwei Gusssegmente (1) erstreckt.

11. Wärmetauscher nach einem der Ansprüche 8 bis 10,
**dadurch gekennzeichnet, dass** der Brenner nach dem Prinzip der Umkehrfeuerung arbeitet und an der als Brennertür ausgebildeten Abdeckung (10) montiert ist, die in ihrem unteren Bereich den Überströmkanal bildet.

12. Wärmetauscher nach einem der Ansprüche 1 bis 11,
**dadurch gekennzeichnet, dass** bei dem mehrteiligen Aufbau des Wärmetauschers aus zwei oder mehr Gusssegmenten die Ausströmöffnungen der Wärmetauscherelemente (6) in einen gemeinsamen Abgas- und Kondenswassersammler (11) münden.

## Claims

1. Heat exchanger, in particular for use in a condensing heater, comprising a multi-part cast body with cast segments (1) arranged one against the other in a row, for the heat exchange between heating gases and surrounding heating water, consisting of a combustion chamber (2) with provision for connecting a gas or oil burner, a water zone (3) with heating water flow and return connections, a heating gas duct (4) and also an exhaust gas outlet (5), **characterized in that** separate removable heat exchanger elements (6) are integrated in the individual cast segments, the heat exchanger elements (6) being at least partially immersed in the water zone (3) of the cast segment (1) and forming a wall of the water zone (3) of a cast segment (1), and the heat exchanger elements (6) serving for cooling the heating gases to below the exhaust gas dew point and allowing a flow to pass through them substantially from the top downwards.

2. Heat exchanger according to Claim 1, **characterized in that** the heat exchanger element (6) consists of a corrosion-resistant material.

3. Heat exchanger according to Claim 1 or 2, **characterized in that** the heat exchanger element (6) and the cast segment (1) have flange faces (7) which are assigned to one another and by which they are joined to one another and are sealed off on the water side.

4. Heat exchanger according to one of Claims 1 to 3, **characterized in that** the heat-transferring surface of the heat exchanger element (6) consists of at least one section of tube (8) bent in a substantially U-shaped manner, the section of tube (8) ending with its inflow and outflow openings in the flange face (7).

5. Heat exchanger according to one of Claims 1 to 3, **characterized in that** the heat-transferring surface of the heat exchanger element (6) consists of at least one flat substantially U-shaped pocket (12), the pocket ending with its inflow and outflow openings in the flange face (7).

6. Heat exchanger according to either of Claims 4 and 5, **characterized in that** the section of tube (8) and the pocket (12) have elements that increase the surface area.

7. Heat exchanger according to either of Claims 5 and 6, **characterized in that** the pocket (12) consists of two half-shells, which are connected to one another in a sealed manner along their joining line.

8. Heat exchanger according to one of Claims 1 to 7, **characterized by** a first heat exchanger surface (9), near the burner, and an adjoining cover (10), for forming an overflow channel into the inflow openings of the heat exchanger element (6) arranged thereunder.

9. Heat exchanger according to Claim 8, **characterized in that**, in the multi-part structure of the heat exchanger comprising two or more cast segments, the cover (10) reaches over all of the inflow openings of the heat exchanger elements (6).

10. Heat exchanger according to one of Claims 1 to 9, **characterized in that** the main axis of the combustion chamber (2) runs perpendicularly in relation to the main planes of the cast segments (1), the combustion chamber (2) extending over at least two cast segments (1).

11. Heat exchanger according to one of Claims 8 to 10, **characterized in that** the burner operates on the reverse flame principle and is mounted on the cover (10) formed as a burner door, which in its lower region forms the overflow channel.

12. Heat exchanger according to one of Claims 1 to 11, **characterized in that**, in the multi-part structure of the heat exchanger comprising two or more cast segments, the outflow openings of the heat exchanger elements (6) open out into a common exhaust-gas and condensed-water collector (11).

## Revendications

1. Échangeur thermique, en particulier destiné à être utilisé dans une chaudière à condensation, constitué d'un corps coulé en plusieurs parties comprenant des segments coulés (1) juxtaposés, pour l'échange thermique entre des gaz chauds et de l'eau chaude environnante, constitué d'une chambre de combustion (2) présentant une possibilité de raccordement pour un brûleur à gaz ou un brûleur à mazout, d'une chambre à eau (3) pourvue de raccords d'arrivée et de retour d'eau de chauffage, d'une conduite de gaz chauds (4) ainsi que d'une sortie de gaz de combustion (5), **caractérisé en ce que** des éléments d'échangeur thermique (6) amovibles séparés sont intégrés dans les segments coulés individuels, les éléments d'échangeur thermique (6) pénétrant au moins partiellement dans la chambre à eau (3) du segment coulé (1) et formant une paroi de la chambre à eau (3) d'un segment coulé (1), et les éléments d'échange thermique (6) servant au refroidissement des gaz chauds jusqu'en dessous du point de rosée des gaz de combustion et pouvant être traversés essentiellement du haut vers le bas.

2. Échangeur thermique selon la revendication 1, **caractérisé en ce que** l'élément d'échange thermique (6) est constitué d'un matériau résistant à la corrosion.

3. Échangeur thermique selon la revendication 1 ou 2,
**caractérisé en ce que** l'élément d'échangeur thermique (6) et l'élément coulé (1) comprennent des surfaces de bride (7) associées l'une à l'autre, à l'aide desquelles ils sont joints l'un à l'autre et étanchéifiés du côté eau.

4. Échangeur thermique selon l'une quelconque des revendications 1 à 3,
**caractérisé en ce que** la surface de transfert de chaleur de l'élément d'échangeur thermique (6) est constituée d'au moins une portion de tube (8) courbée essentiellement en forme de U, la portion de tube (8) se terminant par ses ouvertures d'entrée et de sortie dans la surface de bride (7).

5. Échangeur thermique selon l'une quelconque des revendications 1 à 3,
**caractérisé en ce que** la surface de transfert de chaleur de l'élément d'échangeur thermique (6) est constituée d'au moins une cavité (12) plate essentiellement en forme de U, la cavité se terminant par ses ouvertures d'entrée et de sortie dans la surface de bride (7).

6. Échangeur thermique selon l'une quelconque des revendications 4 et 5,
**caractérisé en ce que** la portion de tube (8) et la cavité (12) comprennent des éléments augmentant la surface.

7. Échangeur thermique selon l'une quelconque des revendications 5 et 6,
**caractérisé en ce que** la cavité (12) est constituée de deux demi-coques qui sont reliées l'une à l'autre de manière étanche le long de leur ligne de jonction.

8. Échangeur thermique selon l'une quelconque des revendications 1 à 7,
**caractérisé par** une première surface d'échangeur thermique (9) proche du brûleur et un couvercle (10) s'y raccordant pour réaliser un canal de décharge dans les ouvertures d'entrée de l'élément d'échangeur thermique (6) disposé en dessous.

9. Échangeur thermique selon la revendication 8,
**caractérisé en ce qu'**en cas de structure en plusieurs parties de l'échangeur thermique à partir de deux segments coulés ou plus, le couvercle (10) dépasse au-delà de toutes les ouvertures d'entrée des éléments d'échangeur thermique (6).

10. Échangeur thermique selon l'une quelconque des revendications 1 à 9,
**caractérisé en ce que** l'axe principal de la chambre de combustion (2) s'étend perpendiculairement aux plans principaux des segments coulés (1), la chambre de combustion (2) s'étendant sur au moins deux segments coulés (1).

11. Échangeur thermique selon l'une quelconque des revendications 8 à 10,
**caractérisé en ce que** le brûleur fonctionne selon le principe du foyer borgne et est monté sur le couvercle (10) réalisé sous forme de porte de brûleur, lequel couvercle forme dans sa région inférieure le canal de décharge.

12. Échangeur thermique selon l'une quelconque des revendications 1 à 11,
**caractérisé en ce qu'**en cas de structure en plusieurs parties de l'échangeur thermique à partir de deux segments coulés ou plus, les ouvertures de sortie des éléments d'échangeur thermique (6) débouchent dans un collecteur commun de gaz de combustion et d'eau condensée (11).
